# EUROPÄISCHE PATENTSCHRIFT

(11) **EP 2 149 700 B1**
(45) Veröffentlichungstag und Bekanntmachung des Hinweises auf die Patenterteilung: **27.07.2016**
(21) Anmeldenummer: 09008094.6
(22) Anmeldetag: 19.06.2009
(51) Int. Cl.: F03D 1/06, F03D 80/00

(54) **Rotorwelle für eine Windenergieanlage**
Rotor shaft for a wind power plant
Arbre de rotor d'une éolienne

(30) Priorität: 29.07.2008 DE 102008035339
(43) Veröffentlichungstag der Anmeldung: 03.02.2010
(73) Patentinhaber: Nordex Energy GmbH, 22419 Hamburg (DE)
(72) Erfinder: Göpfert, Ulf, 18057 Rostock (DE); Kaiser, Uwe, 18055 Rostock (DE)
(74) Vertreter: Hauck Patentanwaltspartnerschaft mbB

(56) Entgegenhaltungen:
- EP-A1- 1 921 310
- WO-A1-99/23384
- DE-U1- 29 705 011
- US-A1- 2008 143 110

## Beschreibung

Die Erfindung betrifft eine Rotorwelle für eine Windenergieanlage sowie eine Windenenergieanlage. Windenergieanlagen mit einer elektrischen Blatteinstellwinkelregelung (Pitchregelung) sind oftmals mit einem Schleifringsystem ausgerüstet, das als Übertragungseinrichtung elektrische Energie und Signale aus dem ortsfesten elektrischen System des Maschinenhauses der Anlage in das mit dem Rotor der Anlage rotierende Pitchsystem in der Rotornabenbaugruppe überträgt. Bekannte Rotorwellen haben dazu eine Kernbohrung, in der ein feststehendes Leitungsrohr (auch Pitchrohr) verläuft. Das Leitungsrohr hat die Aufgabe, die vom feststehenden Maschinenhaus in die rotierende Rotornabe zu führenden elektrischen Leitungen aufzunehmen und zu schützen. Es beginnt üblicherweise hinter dem Getriebe, wo es auch gelagert ist, und führt die Leitungen von dort bis in die Rotornabe. Oftmals wird das Leitungsrohr am Rotorwellenflansch zur Befestigung der Rotorwelle an der Rotornabe durch ein dort vorgesehenes zweites Lager gelagert. Auf diese Weise rotiert die Rotorwelle um das Leitungsrohr.

Bei den bekannten Rotorwellen endet das Leitungsrohr innerhalb der Rotornabe in einer Kupplung, an der die Übertragungseinrichtung, beispielsweise ein Schleifringkörper, befestigt ist. Die durch das Leitungsrohr geführten Leitungen enden in einem Stecker der Kupplung, der wiederum mit einer Buchse der Übertragungseinrichtung verbunden ist. Die Kupplung nimmt dabei die Massenkräfte der Übertragungseinrichtung auf und leitet sie in das Leitungsrohr ein. Die Übertragungseinrichtung hängt also frei im Innenraum der Rotornabe. Im Fall eines Schleifringsystems besteht die Übertragungseinrichtung beispielsweise aus einem feststehenden inneren Teil (Innenring) und einem rotierenden äußeren Teil (Außenring). Über Schleifkontakte zwischen dem feststehenden Innenring und dem rotierenden Außenring werden elektrischen Energie und Steuersignale übertragen. Über zusätzliche elektrische Leitungen, die an dem rotierenden Außenring befestigt sind, werden die elektrische Energie und die Steuersignale in die Rotornabe geführt und können dort beispielsweise die Blatteinstellwinkelregelung der Anlage speisen. Außen- und Innenring sind über Lageranordnungen gelagert. Über eine mit der Rotorwelle einerseits und dem Außenring andererseits verbundene Drehmomentstütze wird bewirkt, dass sich der Außenring mit der Rotorwelle mitdreht.

Bei bekannten Windenergieanlagen befindet sich die Übertragungseinrichtung im Inneren der Rotornabe und nimmt dadurch erheblichen Raum in dem ohnehin begrenzten Nabeninnenraum ein. Dies erschwert das Arbeiten von Personal/ in dem Nabeninnenraum. Insbesondere bei einem Rotornabeneinstieg über zusätzliche hintere Einstiegsöffnungen tritt eine einsteigende Person zwangsläufig auf die Übertragungseinrichtung. Diese muss entsprechend aufwendig geschützt werden. Es ist zu erwarten, dass sich diese Problematik in der Zukunft noch verstärken wird, da zukünftige Windenergieanlagen größere Blatteinstellwinkelleistungen und einen erhöhten Sensorikaufwand erfordern, so dass auch die Abmaße der Übertragungseinrichtung zunehmen werden.

Hinzu kommt, dass bei bekannten Rotorwellen und Windenergieanlagen die Übertragungseinrichtung erst am Aufstellort der Windenergieanlage installiert werden kann, da sie anderenfalls beim Transport der Anlage bzw. des Triebstrangs oder bei der Anlagenenrichtung beschädigt würde. Dies führt zu einem erhöhten Montageaufwand. Außerdem muss die Übertragungseinrichtung zur Montage am Aufstellort in die Rotornabe gebracht werden, was ein Beschädigungsrisiko bedeutet. Hinzu kommt, dass der Einsatz bekannter Konstruktionen bei zu einem überwiegenden Teil hohl ausgebildeten Rotorwellen schwierig ist. Die bekannten Konstruktionen sind außerdem aufwendig hinsichtlich ihrer Montage und bieten nicht immer einen ausreichenden Schutz der einzelnen Komponenten der Übertragungseinrichtung.

Aus WO 99/23384 ist eine Vorrichtung zum Verstellen von an einer Rotornabe einer Windenergieanlage drehbar gelagerten Rotorblättern bekannt, die mehrere Antriebseinheiten zum Verdrehen der Rotorblätter aufweist. Die Leistungsversorgung erfolgt für alle Antriebseinheiten über eine aus der Rotorwelle kommende Leitung und einen in der Rotornabe angeordneten Schleifring.

Ausgehend von dem erläuterten Stand der Technik liegt der Erfindung die Aufgabe zugrunde, eine Rotorwelle sowie eine Windenergieanlage der eingangs genannten Art bereitzustellen, die eine einfache Montage erlaubt, die Arbeit im Rotornabeninnenraum vereinfacht, sowie flexibel einsetzbar ist.

Die Erfindung löst diese Aufgabe durch die Gegenstände der Ansprüche 1, 9 und 18. Vorteilhafte Ausgestaltungen finden sich in den abhängigen Ansprüchen, der Beschreibung sowie den Figuren.

Gemäß einem ersten Aspekt der Erfindung wird die Aufgabe gelöst durch eine zumindest teilweise hohle Rotorwelle für eine Windenergieanlage, umfassend
- ein innerhalb der rotierenden Rotorwelle verlaufendes, feststehendes und elektrische Leitungen aufnehmendes Leitungsrohr,
- eine zumindest teilweise in der Rotorwelle angeordnete Übertragungseinrichtung zur elektrischen Verbindung zwischen einem feststehenden Maschinenhaus und einem rotierenden Rotor der Windenergieanlage,
- wobei die Übertragungseinrichtung einen mit dem Leitungsrohr verbundenen, feststehenden ersten Körper und einen mit der Rotorwelle rotierenden zweiten Körper aufweist, und wobei zwischen dem ersten und dem zweiten Körper ein elektrischer Gleitkontakt besteht,
- ein separat von dem zweiten Körper ausgebildetes, die Übertragungseinrichtung umschließendes Gehäuse, das mit der Rotorwelle verbunden ist und/oder mit einer Rotornabe der Windenergieanlage verbindbar ist, und das mit der Rotorwelle rotiert, und
- eine Drehmoment übertragende Verbindung zwischen dem Gehäuse und dem zweiten Körper der Übertragungseinrichtung.

Erfindungsgemäß ist die Übertragungseinrichtung somit zumindest teilweise innerhalb der Rotorwelle angeordnet. Dadurch ist eine Montage der Übertragungseinrichtung bereits im Werk vor der Errichtung der Anlage am jeweiligen Aufstellort möglich. Die Gefahr einer Beschädigung im Zuge des Transports oder der Errichtung ist erheblich vermindert. Gleichzeitig steht mehr Raum für Servicepersonal im Nabeninnenraum zur Verfügung. Dadurch kann eine einfache Zutrittsgewährung in den Nabeninnenraum vorgesehen werden. Das die Übertragungseinrichtung dabei vollständig umschließende Gehäuse schützt die Übertragungseinrichtung sicher vor Beschädigungen oder Verschmutzungen, sei dies im Zuge des Transports oder im späteren Betrieb. Der erste Aspekt der Erfindung ist besonders vorteilhaft bei Rotorwellen, die keinen zusätzlichen Flansch zur Befestigung eines Lagers für das Leitungsrohr aufweisen. Das Gehäuse bildet eine Adapterkonstruktion, die eine einfache Montage der Übertragungseinrichtung in unterschiedlich ausgestalteten Rotorwellen erlaubt. So kann die Übertragungseinrichtung insbesondere bei Rotorwellen zum Einsatz kommen, die im Bereich ihres Anschlusses an die Rotornabe der Windenergieanlage überwiegend hohl ausgebildet sind.

Nach einer Ausgestaltung des ersten Aspekts der Erfindung kann das Gehäuse an einem Flansch der Rotorwelle befestigt sein, der zur Befestigung der Rotorwelle an der Rotornabe vorgesehen ist. Dadurch wird eine besonders einfache und gleichzeitig sichere Konstruktion erreicht. Das Gehäuse kann einen Flansch zur Befestigung an der Rotorwelle und/oder der Rotornabe aufweisen. Dadurch wird auch bei überwiegend hohl ausgebildeten Rotorwellen eine besonders einfache Montage erreicht.

Das Leitungsrohr führt elektrische Leitungen aus dem feststehenden Maschinenhaus in die Übertragungseinrichtung. Über den elektrischen Schleifkontakt wird eine Verbindung zu dem rotierenden zweiten Körper der Übertragungseinrichtung hergestellt. Entsprechend können elektrische Leitungen von dem zweiten Körper ausgehen. Zur Führung dieser Leitungen in den Rotornabeninnenraum kann das Gehäuse eine Leitungsdurchführung aufweisen.

Das Gehäuse umschließt die Übertragungseinrichtung vollständig. Damit trotzdem in einfacher Weise eine Wartung der Übertragungseinrichtung möglich ist, sieht eine bevorzugte Ausgestaltung vor, dass das Gehäuse eine dem Innenraum der Rotornabe der Windenergieanlage zugewande, abnehmbare Abdeckung aufweist. Diese Abdeckung, beispielsweise eine Abdeckplatte, kann bei Bedarf in einfacher Weise entfernt werden, um Zugang zu der Übertragungseinrichtung zu gewähren.

Gemäß einer weiteren Ausgestaltung kann an dem Gehäuse ein Lager vorgesehen sein, über welches das Gehäuse drehbar gegenüber dem Leitungsrohr gelagert ist. Das Leitungsrohr kann über zwei Lager an der Rotorwelle abgestützt sein, wobei ein erstes Lager im Bereich des der Rotornabe zugewandeten Endes der Rotorwelle und ein zweites Lager im Bereich des der Rotornabe abgewandten Endes der Rotorwelle vorgesehen sein kann. In besonders vorteilhafter Weise kann dann das erste Lager das an dem Gehäuse vorgesehene Lager sein. In diesem Fall ist also kein zusätzliches erstes Lager erforderlich.

Gemäß einem zweiten Aspekt der Erfindung wird die Aufgabe gelöst durch eine zumindest teilweise hohle Rotorwelle für eine Windenergieanlage, umfassend
- ein innerhalb der rotierenden Rotorwelle verlaufendes, feststehendes und elektrische Leitungen aufnehmendes Leitungsrohr,
- eine zumindest teilweise in der Rotorwelle angeordnete Übertragungseinrichtung zur elektrischen Verbindung zwischen einem feststehenden Maschinenhaus und einem rotierenden Rotor der Windenergieanlage,
- wobei die Übertragungseinrichtung einen mit dem Leitungsrohr verbundenen, feststehenden ersten Körper und einen mit der Rotorwelle rotierenden zweiten Körper aufweist, und wobei zwischen dem ersten und dem zweiten Körper ein elektrischer Gleitkontakt besteht, sowie
- einstückig mit dem zweiten Körper ausgebildete Anschlussmittel, die mit der Rotorwelle verbunden sind und/oder mit einer Rotornabe der Windenergieanlage verbindbar sind, und die mit der Rotorwelle rotieren.

Bezüglich der Funktion der Rotorwelle nach dem zweiten Aspekt der Erfindung und insbesondere der damit verbundenen Vorteile gilt weitgehend das oben zu dem ersten Aspekt der Erfindung Gesagte. Gemäß dem zweiten Aspekt der Erfindung verfügt der rotierende zweite Körper der Übertragungseinrichtung jedoch selbst über Mittel zum direkten Befestigen an der Rotorwelle. Dadurch werden die Massenkräfte der Übertragungseinrichtung direkt in die Rotorwelle abgeleitet. Die Anschlussmittel übernehmen gleichzeitig die Funktion einer Drehmomentstütze, so dass keine weitere Drehmoment übertragende Verbindung zwischen der Rotorwelle und dem zweiten Körper erforderlich ist. Auch ein Lager für das Leitungsrohr an der Rotorwelle ist nicht mehr erforderlich. Die Rotorwelle nach dem zweiten Aspekt der Erfindung zeichnet sich somit durch eine geringe Komponentenanzahl und somit einen vereinfachten Aufbau aus. Außerdem ist sie einfach montierbar und bietet gute Wartungsmöglichkeiten.

Gemäß einer Ausgestaltung des zweiten Aspekts der Erfindung können die Anschlussmittel an einem Flansch der Rotorwelle befestigt sein, der zur Befestigung der Rotorwelle an der Rotornabe vorgesehen ist. Dies erleichtert die Montage. Ebenso können die Anschlussmittel selbst einen Flansch zur Befestigung an der Rotorwelle und/oder Rotornabe aufweisen.

Die Anschlussmittel können eine Leitungsdurchführung zur Führung elektrischer Leitungen in die Rotornabe aufweisen. Um einen optimierten Schutz der Übertragungseinrichtung vor Verschmutzung und/oder Beschädigung zu erreichen, können die Anschlussmittel eine Abdeckung der Übertragungseinrichtung gegenüber dem Innenraum der Rotornabe bilden. Um dabei eine einfache Wartung zu ermöglichen, kann vorgesehen sein, dass die Abdeckung im Bereich der Anschlussmittel geöffnet werden können. Bei den erfindungsgemäßen Rotorwellen kann der Gleitkontakt zwischen dem ersten und dem zweiten Körper der Übertragungseinrichtung ein Schleifringkontakt sein. Die Übertragungseinrichtung bildet somit ein Schleifringsystem mit einem feststehenden Innenring und einem um den Innenring rotierenden und in Schleifkontakt mit dem Innenring stehenden Außenring. Solche Schleifringkontakte zeichnen sich durch eine hohe Zuverlässigkeit und geringe Wartungskosten aus.

Grundsätzlich kann die Übertragungseinrichtung vollständig in der Rotorwelle angeordnet sein. Auf diese Weise steht in dem Rotornabeninnenraum besonders viel Raum zur Verfügung, beispielsweise für Arbeiten durch Servicepersonal. Es ist aber auch denkbar, die Übertragungseinrichtung nur teilweise in der Rotorwelle anzuordnen, insbesondere so weit, dass in dem Rotornabeninnenraum ausreichend Raum für Personal zur Verfügung steht. Auf diese Weise kann der in der Rotorwelle für die Übertragungseinrichtung benötigte Raum verringert werden, wodurch die Festigkeit und Steifigkeit der Rotorwelle, erhöht wird. Außerdem erleichtert dies die Montage.

Über die von der Übertragungseinrichtung bereitgestellte elektrische Verbindung können insbesondere elektrische Energie (elektrische Leistung) und/oder elektrische Steuersignale übertragen werden. Die Verbindung zwischen dem Leitungsrohr und dem ersten Körper der Übertragungseinrichtung kann grundsätzlich direkt oder indirekt erfolgen, beispielsweise über eine Kupplung.

Die Aufgabe wird außerdem durch eine Windenergieanlage mit einer erfindungsgemäßen Rotorwelle gelöst.

Die Erfindung verbessert die Sicherheit und Ergonomie für in der Rotornabe arbeitendes Servicepersonal. Außerdem wird eine Montage der Übertragungseinrichtung bereits im Werk vor der Errichtung der Anlage ermöglicht. Dadurch werden Gefahren durch den Transport und die Errichtung am Aufstellort der Anlage minimiert. Gleichzeitig wird durch die vereinfachte Montage der Rotorwelle der Arbeitsaufwand bei der Inbetriebnahme der Windenergieanlage minimiert. Auch der konstruktive Aufwand für die Zutrittsgewährung in den Rotornabeninnenraum wird verringert.

Ein Ausführungsbeispiel der Erfindung wird nachfolgend anhand einer Zeichnung näher erläutert. Es zeigen schematisch:
- Fig. 1: eine erfindungsgemäße Rotorwelle in einem Querschnitt gemäß einem ersten Ausführungsbeispiel,
- Fig. 2: eine erfindungsgemäße Rotorwelle in einem Querschnitt gemäß einem zweiten Ausführungsbeispiel.

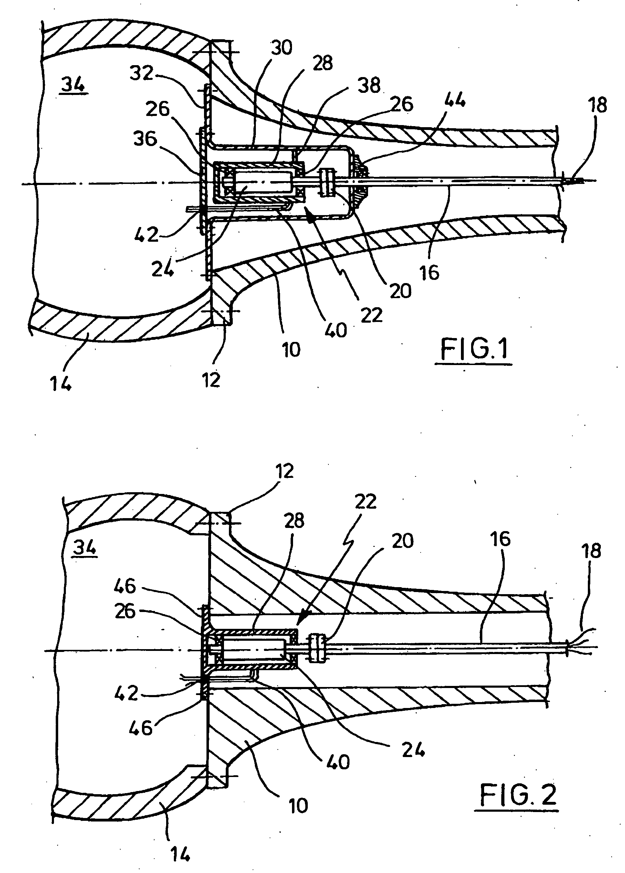

Soweit nichts anderes bestimmt ist, bezeichnen in den Figuren gleiche Bezugszeichen gleiche Gegenstände. In Fig. 1 ist eine zum überwiegenden Teil hohl ausgebildete Rotorwelle 10 einer nicht näher dargestellten Windenergieanlage gemäß dem ersten Aspekt der Erfindung gezeigt. Die Rotorwelle 10 weist einen Flansch 12 auf, mit dem sie an einer Rotornabe 14 der Anlage befestigt ist. Innerhalb der mit der Rotornabe 14 rotierenden Rotorwelle 10 verläuft koaxial ein feststehendes Leitungsrohr 16 (Pitchrohr). Das Leitungsrohr 16 führt elektrische Leitungen 18 aus dem feststehenden Maschinenhaus (nicht dargestellt) der Windenergieanlage in Richtung des der Rotornabe 14 zugewandeten Endes der Rotorwelle 10. Das Leitungsrohr 16 ist über eine ebenfalls feststehende Kupplung 20 mit einer vollständig innerhalb der Rotorwelle 10 angeordneten Übertragungseinrichtung 22 zur elektrischen Verbindung zwischen dem feststehenden Maschinenhaus und dem rotierenden Rotor verbunden.

Die Übertragungseinrichtung 22 weist einen ersten feststehenden Körper 24 auf, der über die Kupplung 20 mit dem Leitungsrohr 16 verbunden ist. Über zwei Lager 26 ist ein zweiter Körper 28 der Übertragungseinrichtung drehbar gegenüber dem ersten Körper 24 gelagert. Zwischen dem ersten Körper 24 und dem zweiten Körper 28 besteht ein elektrischer Schleifkontakt. Der erste und zweite Körper 24, 28 bilden dabei ein Schleifringsystem wobei der erste Körper 24 einen feststehenden Innenring und der zweite Körper 28 einen rotierenden Außenring bildet. Weiterhin ist ein separat vom zweiten Körper 28 ausgebildetes Gehäuse 30 vorgesehen, das die Übertragungseinrichtung 22 vollständig umschließt. Das Gehäuse 30 ist ebenfalls vollständig innerhalb der Rotorwelle 10 angeordnet. Das Gehäuse 30 besitzt einen Flansch 32, mit dem es an dem Flansch 12 der Rotorwelle 10 befestigt ist. Es rotiert also gemeinsam mit der Rotorwelle 10 und der Rotornabe 14. Das Gehäuse 30 weist weiterhin eine dem Innenraum 34 der Rotornabe 14 zugewandte Abdeckung 36 in Form einer Abdeckplatte 36 auf. Die Abdeckung 36 ist an dem Gehäuse 30 lösbar befestigt. Auf diese Weise kann beispielsweise zur Wartung der Übertragungseinrichtung 22 das Gehäuse 30 geöffnet werden. Gleichzeitig ist im geschlossenen Zustand des Gehäuses 30 die Übertragungseinrichtung 22 vor Beschädigung oder Verschmutzung sicher geschützt.

Zwischen dem Gehäuse 30 und dem zweiten Körper 28 der Übertragungseinrichtung besteht eine Drehmoment übertragende Verbindung 38. Diese Drehmomentstütze 38 stellt sicher, dass bei einer Rotation der Rotornabe 14 und der Rotorwelle 10 und damit des Gehäuses 30 auch der zweite Körper 28 der Übertragungseinrichtung 22 mitrotiert. Dabei werden durch die elektrischen Leitungen 18 in den feststehenden ersten Körper 24 der Übertragungseinrichtung 22 geleitete elektrische Signale und/oder elektrische Energie über den Schleifkontakt auf den rotierenden zweiten Körper 28 übertragen. Über elektrische Leitungen 40 werden diese Signale und/oder elektrische Energie aus dem zweiten Körper 28 durch eine Leitungsdurchführung 42 des Gehäuses 30 in den Rotornabeninnenraum 34 geführt. Von dort können die Leitungen 40 beispielsweise einer Blatteinstellwinkelregelung der Windenergieanlage zugeführt werden. An seinem dem Rotornabeninnenraum 34 abgewandten Ende besitzt das Gehäuse 30 ein Lager 44, über das das Gehäuse 30 gegenüber dem Leitungsrohr 16 gelagert ist.

Die in Fig. 1 gezeigte Rotorwelle bietet maximalen Raum für Servicepersonal in dem Innenraum 34 der Nabe 14. Gleichzeitig ist die Übertragungseinrichtung 22 durch das Gehäuse 30 optimal geschützt. Durch die abnehmbare Abdeckung 36 kann die Übertragungseinrichtung 22 in einfacher Weise gewartet werden. Aufgrund der Integration der Übertragungseinrichtung 22 einschließlich des Gehäuses 30 in die Rotorwelle 10 kann die Übertragungseinrichtung 22 bereits im Werk in der Rotorwelle 10 montiert werden, bevor die Anlage an ihrem jeweiligen Aufstellort errichtet wird.

In Fig. 2 ist eine Rotorwelle 10 gemäß dem zweiten Aspekt der Erfindung dargestellt. Der Aufbau dieser Rotorwelle 10 entspricht weitgehend dem Aufbau der in Fig. 1 dargestellten Rotorwelle 10 gemäß dem ersten Aspekt der Erfindung. Die Rotorwelle 10 nach dem zweiten Aspekt unterscheidet sich jedoch hinsichtlich ihrer Übertragungseinrichtung 22 zur elektrischen Verbindung zwischen dem feststehenden Maschinenhaus und dem rotierenden Rotor der Windenergieanlage. So weist die Übertragungseinrichtung 22 gemäß dem zweiten Aspekt der Erfindung kein separates Gehäuse auf, das die Übertragungseinrichtung 22 umschließt. Stattdessen sind einstückig mit dem zweiten Körper 28 ausgebildete Anschlussmittel 46 in Form eines Flansches 46 vorgesehen. Der Flansch 46 ist an dem dem Rotornabeninnenraum 34 zugewandeten Ende des zweiten Körpers 28 ausgeformt. Der Flansch 46 ist wiederum an dem Flansch 12 der Rotorwelle 10 befestigt. Aufgrund dieser Befestigung ist sichergestellt, dass der zweite Körper 28 zusammen mit der Rotornabe 14 und der Rotorwelle 10 rotiert.

Die Rotorwelle 10 gemäß dem zweiten Aspekt der Erfindung zeichnet sich durch einen vereinfachten Aufbau und damit eine vereinfachte Montage aus. Gleichzeitig bildet der Flansch 46 des zweiten Körpers 28 eine Abdeckung der Übertragungseinrichtung 22 gegenüber dem Innenraum 34 der Rotornabe 14. Die Massenkräfte der Übertragungseinrichtung 22 werden direkt in die Rotorwelle 10 geleitet. Außerdem übernimmt der Flansch 46 die Funktion der Drehmomentstütze 38 bei der Rotorwelle 10 gemäß dem ersten Aspekt der Erfindung, die somit entfallen kann. Auch das Lager 44 des Leitungsrohrs 16 an der Rotorwelle 10 kann bei der Welle 10 gemäß dem zweiten Aspekt der Erfindung entfallen.

Selbstverständlich können die erfindungsgemäßen Übertragungseinrichtungen 22 auch nur teilweise innerhalb der Rotorwelle 10 angeordnet sein. Ebenso wäre es denkbar, das Gehäuse 30 bei der Rotorwelle 10 gemäß dem ersten Aspekt der Erfindung bzw. die Anschlussmittel 46 bei der Rotorwelle 10 gemäß dem zweiten Aspekt der Erfindung zusätzlich oder alternativ mit der Rotornabe 14 zu verbinden.

## Patentansprüche

1. Rotorwelle für eine Windenergieanlage, wobei die Rotorwelle zumindest teilweise hohl ist, umfassend
- ein innerhalb der rotierenden Rotorwelle (10) verlaufendes, feststehendes und elektrische Leitungen (18) aufnehmendes Leitungsrohr (16),
- eine zumindest teilweise in der Rotorwelle (10) angeordnete Übertragungseinrichtung (22) zur elektrischen Verbindung zwischen einem feststehenden Maschinenhaus und einem rotierenden Rotor der Windenergieanlage,
- wobei die Übertragungseinrichtung (22) einen mit dem Leitungsrohr (16) verbundenen, feststehenden ersten Körper (24) und einen mit der Rotorwelle (10) rotierenden zweiten Körper (28) aufweist, und wobei zwischen dem ersten und dem zweiten Körper (24, 28) ein elektrischer Gleitkontakt besteht,
**dadurch gekennzeichnet, dass**
- eine Drehmoment übertragende Verbindung (38) zwischen dem Gehäuse (30, 36) und dem zweiten Körper (28) der Übertragungseinrichtung (22) vorgesehen ist, und
- ein separat von dem zweiten Körper (28) ausgebildetes, die Übertragungseinrichtung (22) umschließendes Gehäuse (30, 36), das mit der Rotorwelle (10) verbunden ist und/oder mit einer Rotornabe (14) der Windenergieanlage verbindbar ist, und das mit der Rotorwelle (10) rotiert.

2. Rotorwelle nach Anspruch 1, **dadurch gekennzeichnet, dass** die Rotorwelle (10) im Bereich ihres Anschlusses an die Rotornabe (14) der Windenergieanlage überwiegend hohl ausgebildet ist.

3. Rotorwelle nach einem der Ansprüche 1 oder 2, **dadurch gekennzeichnet, dass** das Gehäuse (30, 36) an einem Flansch (12) der Rotorwelle (10) befestigt ist, der zur Befestigung der Rotorwelle (10) an der Rotornabe (14) vorgesehen ist.

4. Rotorwelle nach einem der vorhergehenden Ansprüche, **dadurch gekennzeichnet, dass** das Gehäuse (30, 36) einen Flansch (32) zur Befestigung an der Rotorwelle (10) und/oder der Rotornabe (14) aufweist.

5. Rotorwelle nach einem der vorhergehenden Ansprüche, **dadurch gekennzeichnet, dass** das Gehäuse (30, 36) eine Leitungsdurchführung (42) zur Führung elektrischer Leitungen (40) in die Rotornabe (14) aufweist.

6. Rotorwelle nach einem der vorhergehenden Ansprüche, **dadurch gekennzeichnet, dass** das Gehäuse (30, 36) eine dem Innenraum (34) der Rotornabe (14) der Windenergieanlage zugewandte, abnehmbare Abdeckung (36) aufweist.

7. Rotorwelle nach einem der vorhergehenden Ansprüche, **dadurch gekennzeichnet, dass** an dem Gehäuse (30, 36) ein Lager (44) vorgesehen ist, über das das Gehäuse (30, 36) drehbar gegenüber dem Leitungsrohr (16) gelagert ist.

8. Rotorwelle nach Anspruch 7, **dadurch gekennzeichnet, dass** das Leitungsrohr (16) über zwei Lager in der Rotorwelle (10) abgestützt ist, wobei ein erstes Lager (44) im Bereich des der Rotornabe (14) zugewandten Endes der Rotorwelle (10) und ein zweites Lager im Bereich des der Rotornabe (14) abgewandten Endes der Rotorwelle (10) vorgesehen ist, und wobei das erste Lager (44) das an dem Gehäuse (30, 36) vorgesehene Lager (44) ist.

9. Rotorwelle für eine Windenergieanlage, wobei die Rotorwelle zumindest teilweise hohl ist, umfassend
- ein innerhalb der rotierenden Rotorwelle (10) verlaufendes, feststehendes und elektrische Leitungen (18) aufnehmendes Leitungsrohr (16),
- eine zumindest teilweise in der Rotorwelle (10) angeordnete Übertragungseinrichtung (22) zur elektrischen Verbindung zwischen einem feststehenden Maschinenhaus und einem rotierenden Rotor der Windenergieanlage,
- wobei die Übertragungseinrichtung (22) einen mit dem Leitungsrohr (16) verbundenen, feststehenden ersten Körper (24) und einen mit der Rotorwelle (10) rotierenden zweiten Körper (28) aufweist, und wobei zwischen dem ersten und dem zweiten Körper (24, 28) ein elektrischer Gleitkontakt besteht,
**dadurch gekennzeichnet, dass**
- einstückig mit dem zweiten Körper (28) ausgebildete Anschlussmittel (46), die mit der Rotorwelle (10) verbunden sind und/oder mit einer Rotornabe (14) der Windenergieanlage verbindbar sind, und die mit der Rotorwelle (10) rotieren, vorgesehen sind.

10. Rotorwelle nach Anspruch 9, **dadurch gekennzeichnet, dass** die Anschlussmittel (46) an einem Flansch (12) der Rotorwelle (10) befestigt sind, der zur Befestigung der Rotorwelle (10) an der Rotornabe (14) vorgesehen ist.

11. Rotorwelle nach einem der Ansprüche 9 oder 10, **dadurch gekennzeichnet, dass** die Anschlussmittel (46) einen Flansch (46) zur Befestigung an der Rotorwelle (10) und/oder der Rotornabe (14) aufweisen.

12. Rotorwelle nach einem der Ansprüche 9 bis 11, **dadurch gekennzeichnet, dass** die Anschlussmittel (46) eine Leitungsdurchführung (42) zur Führung elektrischer Leitungen (40) in die Rotornabe (14) aufweisen.

13. Rotorwelle nach einem der Ansprüche 9 bis 12, **dadurch gekennzeichnet, dass** die Anschlussmittel (46) eine Abdeckung der Übertragungseinrichtung (22) gegenüber dem Innenraum (34) der Rotornabe (14) bilden.

14. Rotorwelle nach Anspruch 13, **dadurch gekennzeichnet, dass** die Anschlussmittel (46) im Bereich der Abdeckung geöffnet werden können.

15. Rotorwelle nach einem der vorhergehenden Ansprüche, **dadurch gekennzeichnet, dass** der Gleitkontakt zwischen dem ersten und dem zweiten Körper (24, 28) ein Schleifringkontakt ist.

16. Rotorwelle nach einem der vorhergehenden Ansprüche, **dadurch gekennzeichnet, dass** die Übertragungseinrichtung (22) vollständig in der Rotorwelle (10) angeordnet ist.

17. Rotorwelle nach einem der vorhergehenden Ansprüche, **dadurch gekennzeichnet, dass** über die elektrische Verbindung elektrische Energie und/oder elektrische Steuersignale übertragen werden können.

18. Windenergieanlage mit einer Rotorwelle (10) gemäß einem oder mehreren der vorhergehenden Ansprüche.

## Claims

1. A rotor shaft for a wind turbine, wherein the rotor shaft is at least partially hollow, comprising
• a conduit pipe (16), extending in the interior of the rotating rotor shaft (10) and being stationary and accommodating electric lines (18),
• a transmission device (22), arranged at least partially in the rotor shaft (10), for the electric connection between a stationary nacelle and a rotating rotor of the wind turbine,
• wherein the transmission device (22) features a first body (24), stationary and connected to the conduit pipe (16), and a second body (28) rotating with the rotor shaft (10), and wherein there is an electric sliding contact between the first and the second body (24, 28),
**characterized in that**
• a torque transmitting connection (38) between the casing (30, 36) and the second body (28) of the transmission device (22) is provided, and
• a casing (30, 36) surrounding the transmission device (22) and formed separately from the second body (28), which is connected to the rotor shaft (10) and/or adapted to be connected to a rotor hub (14) of the wind turbine, and which rotates with the rotor shaft (10).

2. A rotor shaft according to claim 1, **characterized in that** the rotor shaft (10) is predominantly formed hollow in the region of its connection to the rotor hub (14) of the wind turbine.

3. A rotor shaft according to any one of claims 1 or 2, **characterized in that** the casing (30, 36) is fixed on a flange (12) of the rotor shaft (10), which is provided for the fastening of the rotor shaft (10) on the rotor hub (14).

4. A rotor shaft according to any one of the preceding claims, **characterized in that** the casing (30, 36) features a flange (32) for the fastening on the rotor shaft (10) and/or the rotor hub (14).

5. A rotor shaft according to any one of the preceding claims, **characterized in that** the casing (30, 36) features a line bushing (42) for routing electric lines (40) into the rotor hub (14).

6. A rotor shaft according to any one of the preceding claims, **characterized in that** the casing (30, 36) features a detachable covering (36), facing the inner space (34) of the rotor hub (14) of the wind turbine.

7. A rotor shaft according to any one of the preceding claims, **characterized in that** a bearing (44) is provided on the casing (30, 36), by means of which the casing (30, 36) is mounted rotatably with respect to the conduit pipe (16).

8. A rotor shaft according to claim 7, **characterized in that** the conduit pipe (16) is supported in the rotor shaft (10) by means of two bearings, wherein a first bearing (44) is provided in the region of that end of the rotor shaft (10) which faces the rotor hub (14), and a second bearing in the region of that end of the rotor shaft (10) which is turned away from the rotor hub (14), and wherein the first bearing (44) is the bearing (44) provided on the casing (30, 36).

9. A rotor shaft for a wind turbine, wherein the rotor shaft is at least partially hollow, comprising
• a conduit pipe (16), extending in the interior of the rotating rotor shaft (10) and being stationary and accommodating electric lines (18),
• a transmission device (22), arranged at least partially in the rotor shaft (10), for the electric connection between a stationary nacelle and a rotating rotor of the wind turbine,
• wherein the transmission device (22) features a first body (24), stationary and connected to the conduit pipe (16), and a second body (28) rotating with the rotor shaft (10), and wherein there is an electric sliding contact between the first and the second body (24, 28),
**characterized in that**
• connection means (46) formed in one piece with the second body (28), which are connected to the rotor shaft (10) and/or adapted to be connected with a rotor hub (14) of the wind turbine, and which rotate with the rotor shaft (10) are provided.

10. A rotor shaft according to claim 9, **characterized in that** the connection means (46) are fixed on a flange (12) of the rotor shaft (10), which is provided for the fastening of the rotor shaft (10) on the rotor hub (14).

11. A rotor shaft according to any one of claims 9 or 10, **characterized in that** the connection means (46) feature a flange (46) for the fastening on the rotor shaft (10) and/or the rotor hub (14).

12. A rotor shaft according to any one of claims 9 to 11, **characterized in that** the connection means (46) feature a line bushing (42) for routing electric lines (40) into the rotor hub (14).

13. A rotor shaft according to any one of claims 9 to 12, **characterized in that** the connection means (46) form a covering of the transmission device (22) with respect to the inner space (34) of the rotor hub (14).

14. A rotor shaft according to claim 13, **characterized in that** the connection means (46) can be opened in the region of the covering.

15. A rotor shaft according to any one of the preceding claims, **characterized in that** the sliding contact between the first and the second body (24, 28) is a slip ring contact.

16. A rotor shaft according to any one of the preceding claims, **characterized in that** the transmission device (22) is arranged completely in the rotor shaft (10).

17. A rotor shaft according to any one of the preceding claims, **characterized in that** electric energy and/or electric control signals can be transmitted via the electric connection.

18. A wind turbine with a rotor shaft (10) according to one or more of the preceding claims.

## Revendications

1. Arbre de rotor pour une éolienne, l'arbre de rotor étant au moins partiellement creux, comprenant
- un conduit tubulaire (16) stationnaire courant à l'intérieur de l'arbre de rotor rotatif (10) et logeant des câbles électriques (18),
- un dispositif de transmission (22) disposé au moins partiellement dans l'arbre de rotor (10) pour assurer la connexion électrique entre une nacelle stationnaire et un rotor rotatif de l'éolienne,
- dans lequel le dispositif de transmission (22) présente un premier corps (24) stationnaire raccordé au conduit tubulaire (16) et un deuxième corps (28) en rotation avec l'arbre de rotor (10), et dans lequel il existe un contact glissant électrique entre le premier et le deuxième corps (24, 28),
**caractérisé en ce que**
- une liaison (38) transmettant un couple de rotation est prévue entre le boîtier (30, 36) et le deuxième corps (28) du dispositif de transmission (22), et
- un boîtier (30, 36) séparé du deuxième corps (28) et enveloppant le dispositif de transmission (22) est prévu, boîtier raccordé à l'arbre de rotor (10) et/ou pouvant être raccordé à un moyeu de rotor (14) de l'éolienne et étant en rotation avec l'arbre de rotor (10).

2. Arbre de rotor selon la revendication 1, **caractérisé en ce que** l'arbre de rotor (10) est en majorité creux au niveau de son raccord avec le moyeu de rotor (14) de l'éolienne.

3. Arbre de rotor selon l'une quelconque des revendications 1 ou 2, **caractérisé en ce que** le boîtier (30, 36) est fixé à une bride (12) de l'arbre de rotor (10) prévue pour la fixation de l'arbre de rotor (10) au moyeu de rotor (14).

4. Arbre de rotor selon l'une quelconque des revendications précédentes, **caractérisé en ce que** le boîtier (30, 36) présente une bride (32) pour la fixation à l'arbre de rotor (10) et/ou au moyeu de rotor (14).

5. Arbre de rotor selon l'une quelconque des revendications précédentes, **caractérisé en ce que** le boîtier (30, 36) présente un passe-câble (42) pour mener les câbles électriques (40) dans le moyeu de rotor (14).

6. Arbre de rotor selon l'une quelconque des revendications précédentes, **caractérisé en ce que** le boîtier (30, 36) présente une chape (36) amovible et orientée vers l'espace intérieur (34) du moyeu de rotor (14) de l'éolienne.

7. Arbre de rotor selon l'une quelconque des revendications précédentes, **caractérisé en ce qu'**un palier (44) est prévu sur le boîtier (30, 36), palier via lequel le boîtier (30, 36) est supporté de manière rotative par rapport au conduit tubulaire (16).

8. Arbre de rotor selon la revendication 7, **caractérisé en ce que** le conduit tubulaire (16) est supporté via deux paliers dans l'arbre de rotor (10), dans lequel un premier palier (44) est prévu au niveau de l'extrémité de l'arbre de rotor (10) orientée vers le moyeu de rotor (14) et un deuxième palier au niveau de l'extrémité de l'arbre de rotor (10) opposée au moyeu de rotor (14), et dans lequel le premier palier (44) est le palier (44) prévu sur le boîtier (30, 36).

9. Arbre de rotor pour une éolienne, l'arbre de rotor étant au moins partiellement creux, comprenant
- un conduit tubulaire (16) stationnaire courant à l'intérieur de l'arbre de rotor rotatif (10) et logeant des câbles électriques (18),
- un dispositif de transmission (22) disposé au moins partiellement dans l'arbre de rotor (10) pour assurer la connexion électrique entre une nacelle stationnaire et un rotor rotatif de l'éolienne,
- dans lequel le dispositif de transmission (22) présente un premier corps (24) stationnaire raccordé au conduit tubulaire (16) et un deuxième corps (28) en rotation avec l'arbre de rotor (10), et dans lequel il existe un contact glissant électrique entre le premier et le deuxième corps (24, 28), **caractérisé en ce que**
- sont prévus des moyens de raccordement (46) formés en une pièce avec le deuxième corps (28) et reliés à l'arbre de rotor (10) et/ou pouvant être reliés à un moyeu de rotor (14) de l'éolienne et qui sont en rotation avec l'arbre de rotor (10).

10. Arbre de rotor selon la revendication 9, **caractérisé en ce que** les moyens de raccordement (46) sont fixés à une bride (12) de l'arbre de rotor (10) prévue pour la fixation de l'arbre de rotor (10) au moyeu de rotor (14).

11. Arbre de rotor selon l'une quelconque des revendications 9 ou 10, **caractérisé en ce que** les moyens de raccordement (46) présentent une bride (46) pour la fixation à l'arbre de rotor (10) et/ou au moyeu de rotor (14).

12. Arbre de rotor selon l'une quelconque des revendications 9 à 11, **caractérisé en ce que** les moyens de raccordement (46) présentent un passe-câble (42) pour mener les câbles électriques (40) dans le moyeu de rotor (14).

13. Arbre de rotor selon l'une quelconque des revendications 9 à 12, **caractérisé en ce que** les moyens de raccordement (46) forment une chape du dispositif de transmission (22) par rapport à l'espace intérieur (34) du moyeu de rotor (14).

14. Arbre de rotor selon la revendication 13, **caractérisé en ce que** les moyens de raccordement (46) peuvent être ouverts au niveau de la chape.

15. Arbre de rotor selon l'une quelconque des revendications précédentes, **caractérisé en ce que** le contact glissant entre le premier et le deuxième corps (24, 28) est un contact à bague collectrice.

16. Arbre de rotor selon l'une quelconque des revendications précédentes, **caractérisé en ce que** le dispositif de transmission (22) est entièrement disposé dans l'arbre de rotor (10).

17. Arbre de rotor selon l'une quelconque des revendications précédentes, **caractérisé en ce que** de l'énergie électrique et/ou des signaux de commande électriques peuvent être transmis via la connexion électrique.

18. Éolienne avec un arbre de rotor (10) selon l'une quelconque ou plusieurs des revendications précédentes.
